# EUROPEAN PATENT APPLICATION

(11) **EP 4 746 115 A1**
(43) Date of publication of application: **20.05.2026**
(21) Application number: 25212496.1
(22) Date of filing: 30.10.2025
(51) Int. Cl.: H01M 10/44, H01M 10/48, H01M 10/613, H01M 10/633, H01M 10/635, H01M 10/637, H01M 10/647, H01M 10/6551, H01M 10/6567, H01M 10/6557, H01M 50/209, H01M 50/291

(54) **ELECTRIC BATTERY PACK WITH BATTERY CELLS IN DIRECT CONTACT WITH A FLOW OF A TEMPERATURE-REGULATING LIQUID, WITH CYCLIC DISTRIBUTION OF THE TEMPERATURE-REGULATING LIQUID TO DIFFERENT CELL STACKS**

(30) Priority: 14.11.2024 IT 202400025704
(71) Applicant: C.R.F. Società Consortile per Azioni, 10043 Orbassano (Torino) (IT)
(72) Inventor: RICCO, Raffaele, I-10043 Orbassano (Torino) (IT); GARGANO, Marcello, I-10043 Orbassano (Torino) (IT); DE MICHELE, Onofrio, I-10043 Orbassano (Torino) (IT); MAZZARELLA, Carlo, I-10043 Orbassano (Torino) (IT); VURRO, Luca, I-10043 Orbassano (Torino) (IT); LORUSSO, Eligio, I-10043 Orbassano (Torino) (IT)
(74) Representative: Buzzi, Notaro & Antonielli d'Oulx S.p.A.

(57) **Abstract**

An electric battery pack (100) comprises a plurality of stacks (101) of battery cells arranged within a container (4). In each cell stack (101), a temperature-regulating liquid flows from an inlet collecting chamber (13A), which extends below the cell stacks, through the spaces between the cells (2) and up to an outlet collecting chamber (13B) that extends above the cells (2) of the stack (101). The battery pack (1) includes a distribution system (D) configured to enable a major flow of the temperature-regulating liquid, corresponding to most or all of the incoming flow into the battery pack, to be cyclically supplied only to one of the cell stacks (101), or only to a group of cell stacks (101), while the other cell stacks (101) receive a reduced or no flow of the temperature-regulating liquid, such that, at the end of each cycle, a plurality of cell stacks (101) have in turn received, for a determined time interval, most or all of the incoming flow of thermal management liquid into the battery pack (1).

## Description

### Field of the invention

The present invention relates to an electric battery pack, of the type comprising:
- a battery pack container,
- a plurality of battery cell stacks arranged within the battery pack container and each including a group of battery cells,
- wherein the cells of each battery cell stack are arranged along a first horizontal direction, parallel to and spaced apart from each other, so as to define spaces between the cells,
- wherein the battery cell stacks are arranged in one or more rows parallel to a second horizontal direction orthogonal to the first horizontal direction,
- wherein the battery cells of all the battery cell stacks are configured to come into direct contact with a flow of a temperature-regulating liquid that passes through the battery pack container, for maintaining the battery pack within a determined temperature field.

In the present description and in the claims that follow, the term "battery cell stack" means a group of battery cells arranged in mutually adjacent positions, constituting a sub-unit of the battery pack.

### Background of the invention

Electric battery packs having the characteristics indicated above are known and have been used for some time.

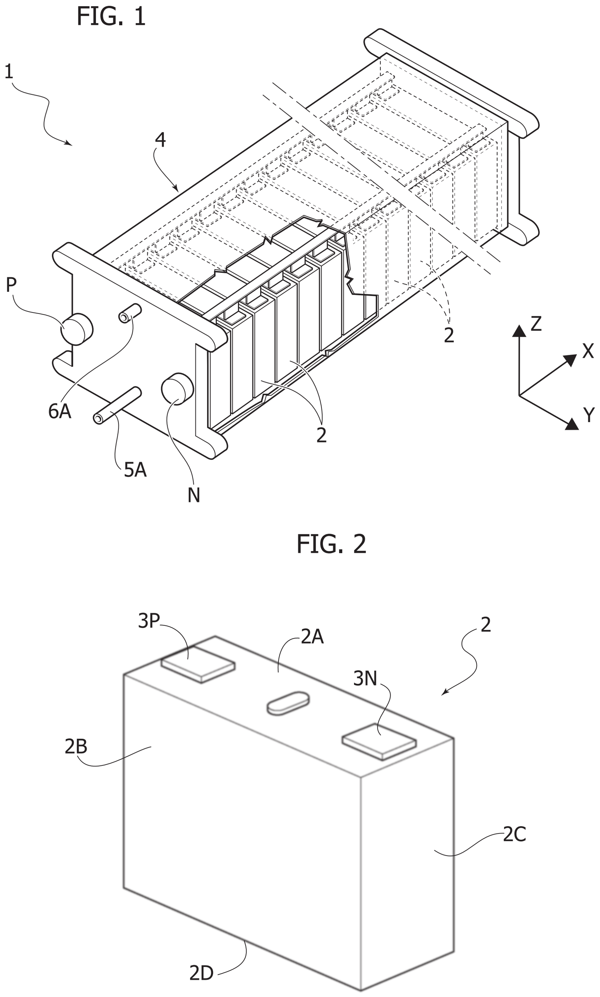

Figures 1-4 of the attached drawings refer to a single battery module of a known type, including a single cell stack. A battery pack can generally comprise a plurality of battery modules of this type, each provided with its own container or arranged within a common container.

The known module illustrated in perspective view in figure 1 and indicated by reference numeral 1, is provided with a temperature-regulating system using a temperature-regulating liquid (typically a dielectric oil). The module 1 includes a plurality of prismatic cells 2, arranged aligned along a direction X inside a container 4 and immersed in a flow of a temperature-regulating liquid that passes through the container 4.

In the present description, and in the attached drawings, construction details relating to the supply circuit of the temperature-regulating liquid and to the control of the temperature of the temperature-regulating liquid are not illustrated, since they can be implemented in any known way and also because such details, taken by themselves, do not fall within the scope of the present invention. In general, the temperature-regulating liquid supply system may include a pump to activate the circulation of the liquid and one or more heat exchangers to maintain the temperature-regulating liquid at a desired temperature. The temperature-regulating liquid (for example, a dielectric oil) can perform both a cooling function, when the temperature of the battery module tends to exceed a predetermined maximum threshold value, and a refrigeration function, when the temperature of the battery module tends to fall below a predetermined minimum threshold value. The temperature-regulating liquid supply system is preferably electronically controlled based on signals emitted by one or more sensors arranged in the battery module. Again, all the aforementioned details are not illustrated here, both because they can be implemented in any known way, and because they do not, taken by themselves, fall within the scope of the invention, and also because their elimination from the drawings makes the latter simpler and easier to understand.

Figure 2 is an enlarged scale perspective view of a prismatic-type battery cell 2, comprising a top surface 2A, two opposite main surfaces 2B, which inside the container 4 are arranged orthogonal to the direction X of cell alignment, two side walls 2c and a bottom wall 2d. In the example illustrated in figure 2, the positive pole 3P and the negative pole 3N of the battery cell 2 protrude from the top wall 2A. However, it is also possible for the two poles 3P, 3N, to be disposed on one of the side faces 2C of the cell 2.

According to a per se known technique, all the positive poles 3P and all the negative poles 3N of the cells 2 are electrically connected to each other and to the two respective poles P and N protruding, in the illustrated example, from an end wall of the container 4 (see figure 1).

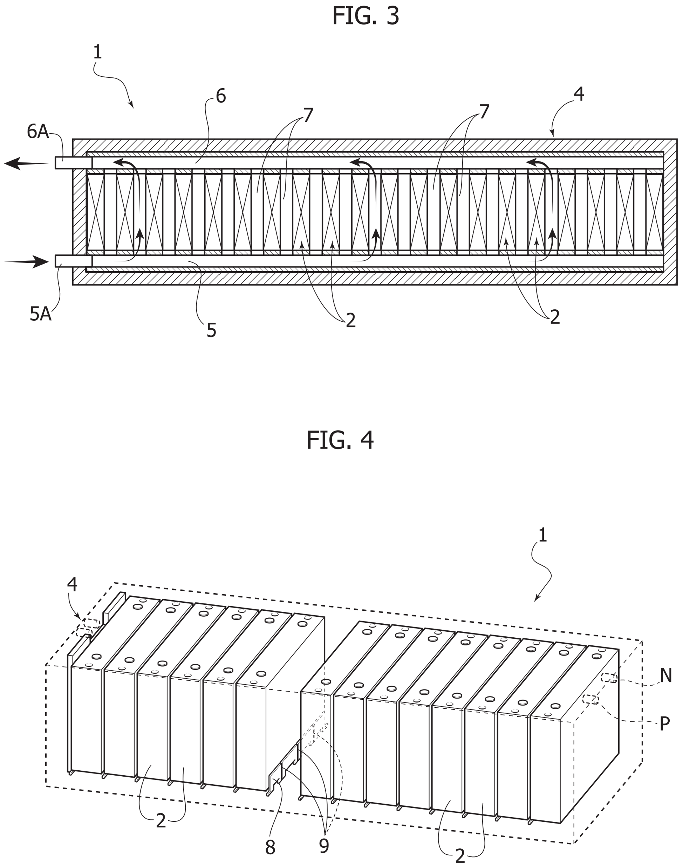

Figure 3 is a schematic sectional view in the median vertical plane of the battery module of figure 1. With reference to this figure, the container 4 includes an inlet opening 5A for the temperature-regulating liquid, communicating with an inlet collector chamber 5 disposed below the array of battery cells 2. The container 4 further comprises an outlet opening 6A for the temperature-regulating liquid, communicating with an outlet collector chamber 6, disposed above the array of battery cells 2. Again with reference to figure 3, the battery cells 2 are arranged spaced apart from each other so as to define a plurality of spaces 7 that place the inlet collector chamber 5 in hydraulic communication with the outlet collector chamber 6. In general, this is achieved by interposing spacer frames between the cells. The assembly of the cells and the spacer frames is maintained in an assembled condition by applying a compression force along the longitudinal direction X (figure 1) by means of any known type of means, for example by means of tie rods (not illustrated). The size of the spaces 7 interposed between the cells 2 has been exaggerated for clarity in figure 3. In reality, the distance between two adjacent cells can be, for example, on the order of a few millimeters (for example, about 2 mm).

Figure 4 is a partially sectioned perspective view of a battery module of the known type described above, in which one of the cells 2 has been removed to illustrate a portion of a spacer frame, comprising a lower horizontal element 8, which extends along the bottom edge of a cell 2, for the entire width of the cell 2 (i.e., in the direction Y of figure 1).

Each element 8 has multiple passages 9 that place the inlet collector chamber 5 in communication with the respective space 7 between two cells 2. The passages 9 are relatively narrow, so as to offer a sufficiently high resistance to the flow of the temperature-regulating liquid to prevent the temperature-regulating liquid from tending to flow more in the spaces between the cells that are closer to the inlet 5A (figure 3) and/or to the outlet 6A. In this way, in the aforementioned known solutions, an attempt is made to uniform the flow of the temperature-regulating liquid between the different spaces between the cells and, in each space between the cells, over the entire area of each cell.

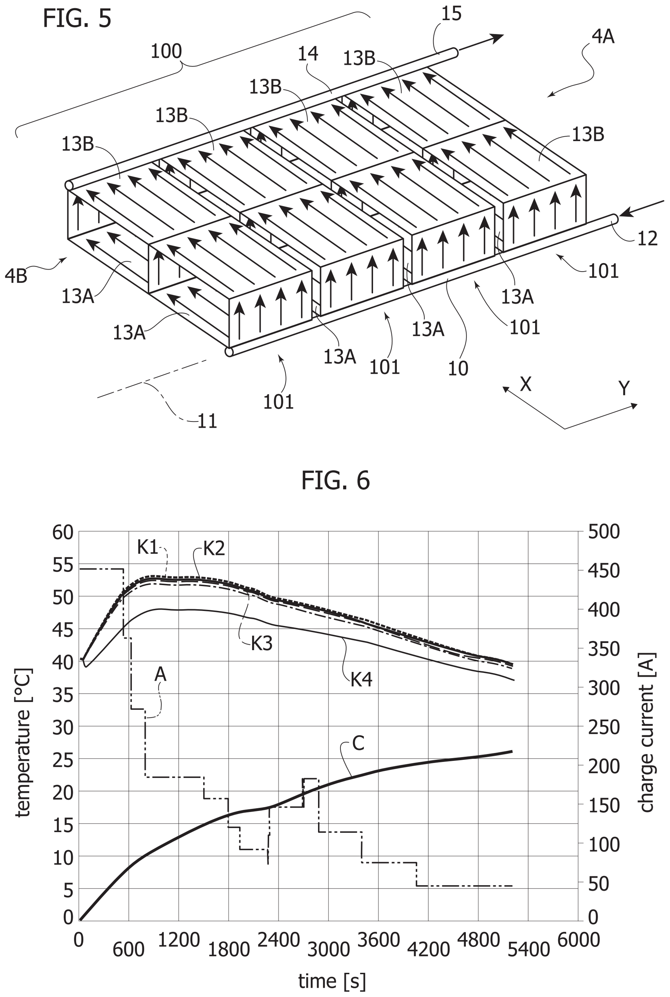

In the Italian patent applications IT102024000007807, IT102024000007813 and IT102024000007816, the Applicant proposed a battery pack with multiple battery cell stacks arranged within a common container which is traversed by the flow of temperature-regulating liquid. In such previous proposals the Applicant presented a temperature-regulating liquid supply scheme of the type illustrated in figure 5, and proposed various solutions with the object of obtaining a substantially uniform flow rate of the temperature-regulating liquid in the different battery cell stacks and between the different cells of each stack.

Figure 5 illustrates, as solid parts, the flows of the temperature-regulating liquid through a battery pack comprising a plurality of cell stacks arranged side by side along the direction Y, each stack including a plurality of cells aligned in the direction X.

The battery pack container is configured such that in each stack 101 the temperature-regulating liquid flows from an inlet collector chamber 13A that extends below the cells 2 of the stack, through the spaces between the cells and up to an outlet collector chamber 13B that extends above the cells of the stack. In figure 11, for simplicity of illustration, for each stack the flows of the temperature-regulating liquid through only three of the spaces between the cells of the stack have been illustrated as solid parts: the two spaces at the ends of the stack and the space at the middle of the length of the stack

The container 4 is further configured to define an inlet supply conduit 10 for the temperature-regulating liquid entering the container 4, extending below the stacks 101 along the direction Y, from an inlet 12, at a first end 4A of the container 4 towards a second end 4B of the container 4, and configured to distribute the temperature-regulating liquid to the inlet collector chambers 13A of the different battery cell stacks 101.

The container 4 is further configured to define an outlet collector conduit 14 for the temperature-regulating liquid, extending above the stacks 101, along the direction Y, from said second end 4B of the container 4 towards said first end 4A of the container 4, up to an outlet 15. The outlet collector conduit 14 is configured to collect the flow of the temperature-regulating liquid coming from the outlet collector chambers 13B of the different stacks 101, and to carry it to the outlet 15.

### Technical Problem

Studies and experiences of the Applicant have shown that in a solution for example of the type illustrated in figure 5, it is extremely difficult to guarantee a homogeneous distribution of the flow, both between the different spaces of each stack, and between the different stacks of the battery pack, also due to variations in the viscosity of the temperature-regulating liquid as the temperature changes.

Another problem is due to the relatively limited flow rate of the pump that supplies the temperature-regulating liquid to the battery pack. Due to the low flow rate provided by the pump (which is distributed among the different stacks and among the different spaces between the cells of each stack) and due to the small size (less than 3 millimeters) of each space between the cells (necessary to achieve a high volumetric energy density of the battery pack), the flow of the temperature-regulating liquid in the spaces between the cells is substantially laminar, which does not favor heat exchange (the heat transfer coefficient HTC is instead higher in the case of high-speed turbulent flow). This problem is even more accentuated in the case of a particularly complex battery pack geometry, for example with multiple levels of blocks/stacks not perfectly superimposed, but also during the heating phase of the battery, for example when temperatures are below -10°: in this case the problem of the pump supplying the oil constituting the temperature-regulating liquid is not one of a reduced flow rate, but of an excess of work required to push the oil under conditions of high viscosity.

Another problem occurs during fast charging, when, typically, due to the high charging power and the consequent power dissipated by the Joule effect, the cells heat up to a predetermined temperature threshold Tₘₐₓ, before the charge is completed: therefore the power delivered to the battery is typically strongly reduced, waiting for the temperature, also due to the effect of the temperature-regulating system, to fall below another predetermined acceptable threshold Tₘᵢₙ. Once the acceptable Tmin is reached, the power delivered by the external charging system is increased.

The aforementioned phenomenon is illustrated in the diagram of figure 6. In this diagram, line C shows the state of charge of a battery cell, measured in ampere-hours (Ah) during a charging phase of the battery pack. As can be seen, the state of charge increases constantly, but with different slopes of the curve. From 0 to about 700 seconds, it can be seen that curve C has a steep slope, which actually corresponds to a fast charge. After 700 seconds, curve C begins to have an asymptotic profile which corresponds to a decrease in the charging speed

Lines K1, K2, K3, K4 show the temperature variation during the recharging of the battery pack in different areas of a face of a cell (respectively on one side, at the center, on the opposite side and in the lower part of the cell face). Curves K1, K2, K3 are substantially coincident, while curve K4 is similar to the others, but shifted towards lower temperatures, as it relates to the lower part of the cell, which is better cooled by the temperature-regulating liquid coming from below.

Line A shows the variation of the electric current supplied during recharging. As can be observed, as soon as the battery cell reaches, in some of its points (lines K1, K2, K3), a temperature around 50° C, the supply electric current is drastically reduced. This means that in practice the fast charging process actually lasts less than 700 seconds, after which it is no longer possible to charge with a high current.

There is therefore a need for further improvements in this field.

Further solutions in this field are known from documents US 2023/268578 A1, US 2023/318118 A1 and US 2017/279172 A1.

### Object of the invention

The object of the present invention is to solve the aforementioned technical problems.

In particular, the invention has the objective of realizing an electric battery pack of the type indicated at the beginning of the present description, in which the temperature of the cells is maintained within a determined field under any operating condition, thanks to a high efficiency of the heat exchange with the temperature-regulating liquid.

Even more particularly, an object of the invention is to ensure that all the stacks or groups of stacks of the battery pack receive, even if only periodically, a substantial flow rate of temperature-regulating liquid, capable of guaranteeing the cooling of the cells, without the need to use a high-power pump.

A further object of the invention is to make the battery recharging phase faster, without involving a risk of thermal runaway of the battery cells.

A further object is also to make faster a warm-up phase of the battery pack after activation at low ambient temperature.

### Summary of the invention

With a view to achieving one or more of the aforementioned objects, the invention has as its subject an electric battery pack having the characteristics indicated in the attached claim 1.

In the battery pack according to the invention, the control valves enable a maximum flow of the temperature-regulating liquid cyclically only to one stack, or only to one group of stacks, while the other stacks receive a reduced or zero flow of the temperature-regulating liquid, such that, at the end of each cycle, all the stacks have received in turn, for a determined time interval, a maximum flow of temperature-regulating liquid.

In this way, each stack, or each group of stacks, receives in turn a maximum flow of temperature-regulating liquid, which creates in the spaces between the cells of each stack a high-speed flow, which guarantees a high efficiency of the heat exchange with the cells.

The present invention therefore arises from the observation that the solution to the problems discussed above, instead of being sought by dividing the flow of temperature-regulating liquid as uniformly as possible among the different cell stacks, can be found by concentrating the entire flow, or the majority of the flow, in a single stack, or in a single group of stacks at a time, and cyclically varying the stack, or the group of stacks that receives the majority of the flow.

The main objective that the invention certainly allows to achieve, especially in the case of a battery pack consisting of numerous stacks and with a particularly tortuous supply conduit geometry, is that by distributing the temperature-regulating liquid in turn to the different stacks or groups of stacks, it is certain that all the stacks or groups of stacks receive, albeit periodically or in any case alternately, a substantial flow rate of temperature-regulating liquid, capable of guaranteeing the cooling of the cells.

In a particular case covered by the invention, which concerns the heating phase of the battery pack after activation at low ambient temperature, having hardware that is capable of supplying the temperature-regulating liquid in turn to different stacks or groups of stacks, it is possible to heat only a portion of the entire battery pack, favoring the rapid heating of that portion of the battery pack, and deferring the heating of the entire battery pack to a subsequent phase, during the operation of the vehicle using the battery pack. This certainly makes the warm-up phase faster, and allows the user to be in driving conditions as soon as possible.

Regarding the opposite case, that in which it is desired to cool the battery during ultra-fast charging, one can think of charging, alternately, the various stacks or groups of stacks so that the group of cells being charged coincides with the one that receives the greater flow rate of cooling liquid. In this way, the thermal dissipation due to the Joule effect can be optimized. In other words, it is possible to cool only a specific stack or group of stacks, supplying to it the majority, or the entirety, of the flow rate of the temperature-regulating liquid supplied to the battery pack, until it reaches a maximum allowable temperature Tₘₐₓ, after which the charging of that stack is interrupted, allowing it to cool down and simultaneously the flow rate delivered to this stack is reduced to zero or to a very low value. As soon as this happens, another stack or group of stacks is put under charge, and simultaneously the majority of the flow rate of the temperature-regulating liquid is diverted to the stack or the group of stacks that is being charged.

As is evident, the invention is applicable to any type of battery cells (prismatic, pouch or cylindrical).

Further advantageous characteristics of the invention are indicated in the attached dependent claims.

The invention also has as its subject the method for thermal control of the battery pack implemented via the system described above.

### Brief description of the figures

Further characteristics and advantages of the invention will become apparent from the following description with reference to the attached drawings, provided by way of non-limiting example only, in which:
figure 1 is a perspective view of a battery module according to the prior art,
figure 2 is a perspective view of a prismatic-type battery cell,
figure 3 is a schematic sectional view of the battery module of figure 1,
figure 4 is a schematic perspective view of an array of battery cells in a battery module according to the prior art,
figure 5 is a schematic perspective view, illustrating as solid parts the flows of the temperature-regulating liquid through a battery pack,
figure 6 is a diagram illustrating the temperature variation of the battery cells during a charging phase, in the case of the previously proposed systems,
figure 7 is a schematic plan view of a lower support plate for the cells of a battery pack according to the invention, showing the arrangement of the different cell stacks and the inlet and outlet conduits for the temperature-regulating liquid,
figure 8 is a schematic plan view illustrating a distribution system including a plurality of control valves interposed in the connection between the circuits for the temperature-regulating liquid associated with the different stacks and the outlet conduit of the temperature-regulating liquid, in an embodiment of the invention, and
figures 9, 10 are diagrams illustrating how the flow of the temperature-regulating liquid is distributed among different cell stacks of the battery pack.

### Detailed description of the invention

Figures 1-6 have already been described above.

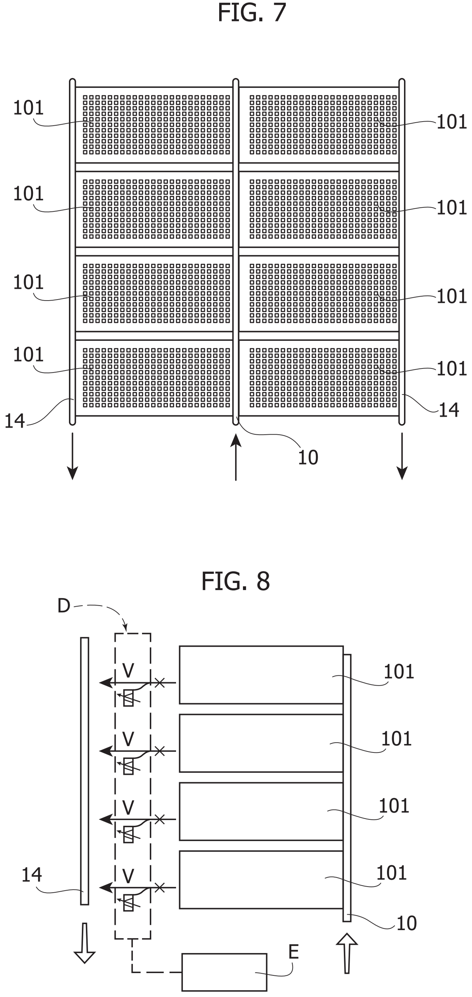

In figures 7-10, parts common with those illustrated in figures 1-5 are indicated by the same reference numerals.

The battery pack according to the invention is of the type described above with reference to figure 5, i.e., comprising a container inside which a plurality of battery cell stacks 2 are arranged. Each cell stack is constituted by a group of cells arranged side by side along the direction X (figure 5), while the stacks are arranged side by side along one or more rows in the direction Y.

In the example described here, the cells 2 are prismatic cells, but, as already indicated, the invention is also applicable to any other type of cells, such as pouch cells or cylindrical cells.

For greater simplicity of illustration, figure 7 shows a schematic plan view of a lower support plate for the cells of a battery pack according to the invention. The support plate has a distribution of holes constituting the restricted passages for the communication between the inlet collector chamber 13A (figure 5) of each stack 101 and the spaces between the cells of each stack 101. The arrangement of figure 7 provides for two rows of cell stacks, each row being composed of four stacks (for a total of eight cell stacks).

With reference to the example of figure 8, the inlet conduit 10 for the temperature-regulating liquid is disposed centrally below the two rows of stacks and has openings communicating with the inlet collector chambers 13A (see figure 5) below the stacks. In the example of figure 8, the outlet collector chambers 13B (see figure 5) above the stacks 101 communicate with two lateral outlet conduits 14.

Also in the battery pack according to the invention, as in the previously proposed solutions that have been described above, a supply system for a temperature-regulating liquid (for example, a dielectric oil) that flows through the spaces between the cells of the different stacks 101 of cells is provided.

The drawings do not show the circuit for the circulation of the temperature-regulating liquid outside the battery pack container, which comprises an electric pump, preferably of an adjustable type, to activate the circulation of the temperature-regulating liquid, and one or more heat exchangers to restore a desired temperature of the temperature-regulating liquid coming from the outlet of the battery pack, before it is reintroduced into the battery pack.

In the case of the invention, unlike the previously proposed solutions, a distribution system D is provided, interposed between the different inlet collector chambers 13A and the inlet conduit 10, or between the different outlet collector chambers 13B and the outlet conduit 14.

In a first embodiment, the distribution system D comprises a plurality of control valves V respectively associated with different stacks (101) of cells and each interposed in the connection between the respective inlet collector chamber 13A and the inlet conduit 10 or in the connection between the respective outlet collector chamber 13B and the outlet conduit 14.

Figure 8 schematically shows an example in which the valves V are interposed in the connections between the circuits for the temperature-regulating liquid associated with the different stacks 101 of cells and a respective outlet conduit 14.

In an example, the control valves V are electrically actuated valves, which are of the on/off type or of the proportional type, and the valve control device comprises an electronic controller configured to actuate the valves V by cyclically opening only one of the valves and leaving the other valves closed or only partially open, such that, in operation, the control valves V enable a greater flow of the temperature-regulating liquid, equal to the majority or the entirety of the flow entering the battery pack, cyclically only to one of the stacks 101 of cells, or only to a group of stacks 101 of cells, while the other stacks 101 of cells receive a reduced or zero flow of the temperature-regulating liquid, such that, at the end of each cycle, a plurality of stacks 101 of cells have received in turn, for a determined time interval, said greater flow of temperature-regulating liquid.

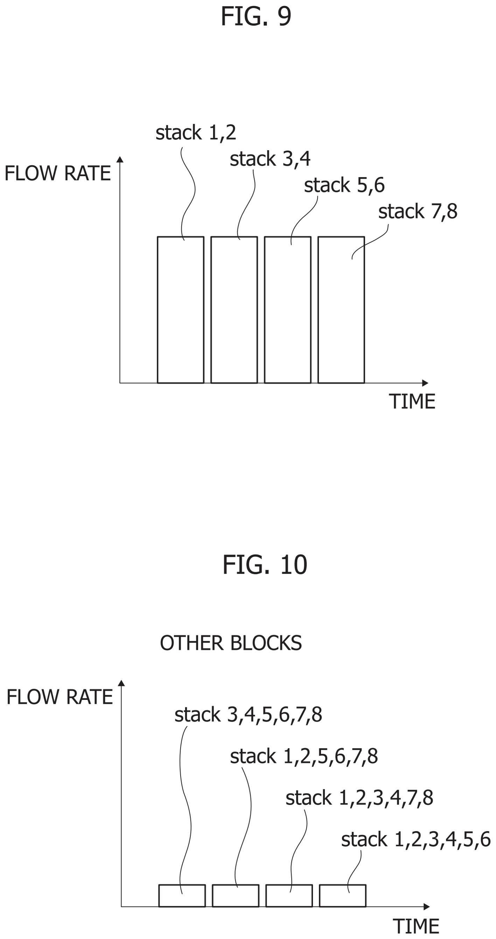

The operating principle of the temperature-regulating liquid supply system according to the present invention is illustrated in the diagrams of figures 9 and 10.

With reference to figure 9 (which refers to the example of figure 7, with eight cell stacks) the greater flow rate of fluid is supplied cyclically only to a pair of stacks, for a determined time interval. Figure 10 shows the four phases in which in turn six blocks receive a zero or very reduced flow rate.

In a variant, the distribution system comprises a distributor including a sliding or rotating movable member, and an actuator of the movable member, under electronic control.

The present invention therefore arises from the observation that the solution to the problems discussed above, instead of being sought by dividing the flow of temperature-regulating liquid as uniformly as possible among the different cell stacks, can be found by concentrating the entire flow, or the majority of the flow, in a single stack at a time, or in a single group of stacks at a time, and cyclically varying the stack (or the group of stacks) that receives the majority of the flow. In this way, for a given maximum flow rate of the temperature-regulating liquid supply pump, the stack that in turn receives the entire flow rate, or almost the entire flow rate, supplied by the pump is subjected to a much more effective thermal control action compared to what occurs in the previously proposed solutions.

By selectively and cyclically supplying the different cell stacks with the maximum pump flow rate, the invention allows generating a turbulent flow regime instead of a laminar one. It is demonstrated that a turbulent regime can increase the heat transfer coefficient (HTC) up to five times compared to a laminar regime.

In any case, even where the pump flow rate and the configuration of the hydraulic circuit were not able to guarantee turbulent rather than laminar motion of the fluid, the invention would still have achieved the object of having supplied each of the stacks equally, avoiding the risk of overheating of some cells due to limited coolant flow rate.

In a preferred embodiment, the battery pack includes a charging circuit for the battery cells configured to supply the charging current cyclically only to the stack, or to the group of stacks, that from time to time receives the maximum flow rate of the temperature-regulating liquid.

For example, if the charging period of the battery pack is 24 minutes and eight cell stacks are provided, the maximum flow rate of the temperature-regulating liquid is supplied only to one pair of stacks at a time. The flow rate will be four times higher compared to the case of constant distribution of the same total flow rate among all the stacks. The period of the cycle for supplying the temperature-regulating liquid to each pair of stacks can be set - for example - to 2 minutes, repeating the cycle three times during the 24 minutes of charging. This approach ensures that all the stacks benefit equally from the improved turbulent flow conditions, optimizing heat removal during the charging process.

As indicated, it could also be provided to charge at the maximum power available at a charging station only the stacks that are from time to time cooled with the maximum flow rate of the temperature-regulating liquid. Meanwhile, the other stacks are recharged at a reduced power. This sectional charging process would also follow a cyclic scheme, synchronized with the temperature-regulating liquid supply cycle. This approach optimizes both cooling efficiency and charging efficiency, ensuring that the stacks receiving the maximum cooling capacity are also charged at the maximum power, thus potentially reducing the overall charging time and maintaining optimal thermal management.

As is evident from the preceding description, the invention allows achieving a plurality of advantages, including in particular the following.
1. Greater heat transfer efficiency: the selective and cyclic supply of all, or almost all, the flow rate supplied by the pump to the different cell stacks of the battery pack generates a turbulent flow regime, significantly improving the heat transfer coefficient (HTC) up to five times compared to a laminar flow regime, which results in better thermal management of the battery pack. Furthermore, it is certain that regardless of the complexity of the hydraulic circuit, all the cell stacks see - albeit cyclically - a predetermined flow of coolant.
2. Optimized cooling and charging strategy: in an optional solution, by combining cooling and charging cycles, the invention allows charging at maximum power only the stacks that are currently cooled with the maximum flow. This reduces the risk of overheating by maximizing the efficiency of the charging process.
3. Energy efficiency: the cyclic supply approach ensures that the pump operates at its point of maximum efficiency, reducing energy consumption and wear compared to a stationary operation where all stacks are continuously supplied at a lower flow rate.
4. Greater battery longevity: by maintaining optimal thermal conditions and avoiding overheating, the invention can help prolong the lifespan of the battery cells, which is crucial for electric vehicles and stationary energy storage systems.
5. Modular and scalable design: the invention is adaptable to different battery pack configurations, allowing easy scaling depending on the application and desired performance.
6. Reduced charging time: the possibility of charging the stacks at maximum power while they are optimally cooled can lead to a reduction in the overall charging time without compromising the safety or health of the battery.
7. Flexibility in system design: the cyclic approach to supply and charging offers flexibility in the design of the thermal management system, allowing adaptation of different flow rates, cycle times, and cooling strategies to specific applications.
8. During the battery heating phase, for example in extreme cold conditions, it is possible to send the flow of heating fluid only to a limited number of stacks, thus speeding up said warm-up phase and deferring the heating of the remaining stacks to the driving condition, when the operating cells contribute to heating the fluid.

According to a further preferred characteristic, the electronic controller E for controlling the distribution system D is configured to:
- during a warm-up phase, after a cold activation of the battery pack, wherein the flow of temperature-regulating liquid is used to heat the battery pack 1, supply the majority, or the entirety, of the flow of temperature-regulating liquid in turn only to the stacks 101 of a part of the battery pack, so as to make the heating of this part of the battery pack faster,
- during a charging phase of the battery pack, wherein the flow of temperature-regulating liquid is used to cool the battery pack, enable the supply of an electric charging current only to the stack, or to the group of stacks, of the battery pack that in turn receives the greater flow rate of the flow of temperature-regulating liquid.

Furthermore, the electronic controller E can be configured to:
- receive data relating to the temperature of the cells of the battery pack from sensors associated with the cells of the battery pack,
- in the case that the temperature of one or more cells of a stack, or of a group of stacks, of the battery pack detected by said sensors exceeds a determined threshold, control said distribution system D to supply the majority of the flow of temperature-regulating liquid to said stack, or group of stacks.

According to a further characteristic, in the case for example that the stacks of the battery pack are not all of the same size, or have cells with different electrochemical structures, or cells with different arrangements, it may be necessary to distribute the flow rate among the various stacks in a non-uniform manner and not with the same periodic actuation.

Naturally, the principle of the invention remaining firm, the construction details and the forms of embodiment may vary widely with respect to what has been described and illustrated by way of example only, without thereby departing from the scope of the present invention, as defined in the attached claims.

## Claims

1. An electric battery pack, comprising:
- a container (4) of the battery pack,
- a plurality of stacks (101) of battery cells (2) arranged within the container (4) of the battery pack and each including a group of battery cells (2),
- wherein the cells (2) of each stack (101) of battery cells are arranged along a first horizontal direction (X), parallel to, and spaced apart with, each other, so as to define spaces between the cells,
- wherein the stacks (101) of battery cells are arranged in one or more rows parallel to a second horizontal direction (Y) orthogonal to the first horizontal direction (X),
- wherein the battery cells (2) of all the stacks (101) of battery cells are configured to come in direct contact with a flow of a temperature-regulating liquid through the container (4) of the battery pack, for the purpose of maintaining the battery pack within a specified temperature range,
- in which the battery pack is configured such that in each stack (101) the temperature-regulating liquid flows from an inlet collector chamber (13A), which extends below the cell stack, through the spaces between the cells (2) and up to an outlet collector chamber (13B) that extends above the cells (2) of the stack (101),
wherein the various inlet collector chambers (13A) of the stacks (101) of cells in the battery pack are all connected to an inlet conduit (10) of the temperature-regulating liquid in the battery pack,
wherein the various outlet collector chambers (13B) of the stacks (101) of cells in the battery pack are all connected to an outlet conduit (14) of the temperature-regulating liquid from the battery pack,
wherein the battery pack includes a distribution system (D) interposed between the different inlet collector chambers (13A) and the inlet duct (10), or between the different outlet collector chambers (13B) and the outlet duct (14), and
wherein the battery pack further comprises a control device (E) of said distribution system (D), configured such that, in operation, the distribution system (D) enables a major flow of the temperature regulating liquid, amounting to most or all of the flow entering the battery pack, cyclically only to one of the stacks (101) of cells or only to one group of stacks (101) of cells, while the other stacks (101) of cells receive a reduced or no flow of the temperature-regulating liquid, such that, at the end of each cycle, a plurality of stacks (101) of cells, or groups of stacks of cells, have received in turn, for a determined time interval, said major flow of temperature-regulating liquid.

2. A battery pack according to claim 1, wherein the distribution system (D) comprises a plurality of control valves (V) respectively associated with different stacks (101) of cells, or different groups of cell stacks.

3. A battery pack according to claim 1, wherein the distribution system comprises a distributor (D) including a sliding or rotating movable member and an electronically controlled actuator of the moving member.

4. A battery pack according to claim 2, wherein the control valves (V) are electrically operated, and are either on/off type or proportional type valves, and said control device includes an electronic controller configured to operate the control valves (V) by cyclically opening only one of the control valves and leaving the other valves either closed or only partially open.

5. A battery pack according to claim 1, wherein the inlet collector chamber of each stack (101) of cells communicates with the spaces between the cells (2) via relatively restricted passages configured to provide sufficient resistance to the flow of the temperature control liquid to prevent a tendency for the temperature control liquid to flow to a greater extent into some spaces between the cells rather than through other spaces.

6. A battery pack according to claim 1, **characterized in that** it includes an electronic controller (E) for controlling said distribution system (D), and that said electronic controller (E) is configured for:
- during a warm-up phase, after a cold activation of the battery pack, wherein the flow of temperature-regulating liquid is used to warm up the battery pack (1), supplying most, or all, of the flow of temperature-regulating liquid in turn only to the stacks (101) of a part of the battery pack, so as to make the warm-up of this part of the battery pack faster,
- during a charging phase of the battery pack, in which the flow of temperature-regulating liquid is used to cool the battery pack, enable the supply of a charging electric current only to the stack, or group of stacks, of the battery pack that each time receives the major flow of temperature-regulating liquid.

7. A battery pack according to claim 1, **characterized in that** it includes an electronic controller for controlling said distribution system (D), and that said electronic controller (E) is configured for:
- receiving battery pack cell temperature data from sensors associated with the battery pack cells,
- in case the temperature of one or more cells of a stack, or a stack group, of the battery pack detected by said sensors exceeds a specified threshold, controlling said distribution system (D) to supply most of the flow of temperature control liquid to said stack, or stack group.

8. A method for thermal control of an electric battery pack, wherein the battery pack comprises
- a container (4) of the battery pack,
- a plurality of stacks (101) of battery cells (2) arranged within the container (4) of the battery pack, and each including a group of battery cells (2),
- wherein the cells (2) of each battery cell stack (101) are arranged along a first horizontal direction (X), parallel to each other and spaced apart, so as to define spaces between the cells,
- in which the battery cell stacks (101) are arranged in one or more rows parallel to a second horizontal direction (Y) orthogonal to the first horizontal direction (X),
- wherein the battery cells (2) of all the battery cell stacks (101) are configured to come into direct contact with a flow of a temperature-regulating liquid flowing through the container (4) of the battery pack, for maintaining the battery pack within a determined temperature range,
- wherein the battery pack is configured such that in each stack (101) the temperature-regulating liquid flows from an inlet collector chamber (13A), which extends below the cell stack, through the spaces between the cells (2) and up to an outlet collector chamber (13B) that extends above the cells (2) of the stack (101),
wherein the different inlet collector chambers of the cell stacks of the battery pack are all connected to a temperature-regulating liquid inlet duct in the battery pack,
wherein the various outlet collector chambers of the cell stacks of the battery pack are all connected to a temperature-regulating liquid outlet conduit of the battery pack,
wherein the battery pack includes a distribution system (D) interposed between the various inlet collector chambers (13A) and the inlet conduit (10), or between the various outlet collector chambers (13B) and the outlet conduit (14), and
wherein the method includes controlling said distribution system (D) in such a way as to enable a major flow of the temperature-regulating liquid, amounting to most or all of the flow entering the battery pack, cyclically only to one of the stacks (101) of cells, or only to a group of stacks (101) of cells while the other stacks (101) of cells receive a reduced or no flow of the temperature-regulating liquid, such that, at the end of each cycle, a plurality of stacks (101) of cells have received in turn, for a determined time interval, said major flow of temperature-regulating liquid.

9. A method according to claim 8, **characterized in that** it comprises the following operations:
- during a warm-up phase, after a cold activation of the battery pack, in which the flow of temperature-regulating liquid is used to warm up the battery pack (1), feeding most, or all, of the flow of temperature-regulating liquid in turn only to the stacks (101) of a part of the battery pack, so as to make the warm-up of this part of the battery pack faster,
- during a charging phase of the battery pack, in which the flow of temperature-regulating liquid is used to cool the battery pack, enabling the supply of a charging electric current only to the stack, or group of stacks, of the battery pack that each time receives the major flow of temperature-regulating liquid flow.

10. A method according to claim 9, **characterized in that** it includes:
- receiving cell temperature data (2) of the battery pack from sensors associated with the battery pack cells,
- in the event that the temperature of one or more cells of a stack, or a stack group, of the battery pack detected by said sensors exceeds a determined threshold, feeding the major flow of temperature-regulating liquid to said stack, or stack group.
